# EUROPEAN PATENT SPECIFICATION

(11) **EP 1 958 855 B1**
(45) Date of publication and mention of the grant of the patent: **23.02.2011**
(21) Application number: 08101198.3
(22) Date of filing: 01.02.2008
(51) Int. Cl.: B62D 51/00, B62D 51/04

(54) **Handle position adjusting structure**
Struktur zur Einstellung der Handgriffstellung
Structure de réglage de la position d'une poignée

(30) Priority: 07.02.2007 CN 200710067206
(43) Date of publication of application: 20.08.2008
(73) Proprietor: Zhejiang Noblelift Equipment Joint Stock Co. Ltd., Economic Development Zone Changxing Zhejiang 313-100 (CN)
(72) Inventor: Zhang, Zhiyu, Changxing, Zhejiang 313100 (CN); Feng, Ping, Changxing, Zehjiang 313100 (CN); Zhou, Xuejun, Changxing, Zhejiang 313100 (CN)
(74) Representative: Vougny, Christophe

(56) References cited:
- EP-A1- 0 200 375
- WO-A1-2009/009446
- DE-U1-202006 015 451
- US-A- 3 738 441

## Description

### Technical field

The present invention relates to the adjusting structure of mechanical operation handle, especially relates to an adjustable tiller structure for a power controlled industrial vehicle.

### Background art

Known adjusting structure of mechanical operation handle is normally in the position that one end of the handle is connected rotatablely to the machine thereof ; the other end is operated by the operator within a preset range. Just like the handle, also known as tiller rod, of all kinds of industrial vehicles that are available on the market such as power pallet trucks and power stackers, etc., the lower end of the handle is hinge jointed with the rotatable main steering column, while the upper end of the handle is fixed to the steering handle, which can swing under the operation of the operator. Meanwhile by operating the buttons and switches, the orders of the operator can be sent to the control device via the conducting wire going through the cavities of the handle and the main steering column, to realize the according movements of the industrial vehicle. It is necessary to construct a position adjusting structure for mechanical operation handle such as the handle of industrial vehicle, so that the operator can adjust the position of the mechanical operated handle according to his height, working condition of the machine and the circumstances to control and operate the handle comfortably. There are pedals specially designed for operators on the industrial vehicles like power pallet trucks and power stackers, so the operators can either standing on the pedal to operate or standing on the ground to operate with the pedal folding up. Then two conditions can be assumed: one is that in order to facilitate the need of the operator to stand on the pedal to operate, the handle should be short taking into account the length of the pedal is limited, thus to avoid the operator being forced to stand on the back edge of the pedal or even move the barycenter out of the pedal. But if the pedal is folded up and the operator is standing on the ground to operate, the distance between the operator and the machine will be too short because of the thickness of the folded pedal and the length of the handle. To avoid kicking the machine, the operator must intend to keep the horizontal distance to the machine, thus he may feel that the handle is too far away and inconvenient to operate. Vice versa, if the length of the handle is suitable for operator to operate standing on the floor, then the operator may feel that the handle is too long when he stands on the pedal to work, so he may have to stand on the back edge of the pedal, even move the barycenter out of the pedal, causing inconvenient in operation. Both of the above mentioned conditions will add extra work to the operator, and thus will lower the accuracy of the operation.

Document US-A-3738441 discloses a tiller structure according to the preamble of claim 1, but provides only for a standing position opposite to the walking position.

Chinese patent NO.200420072249.5 discloses a structure of flexible handle, characterized in that the hand pole and the handgrip are connected by screw thread matching supporting systems, to realize stretch and receive of the handle by the operator. The above mentioned structure can be used in the adjusting structure of mechanical operation handle, but it can't be used in above described power pallet truck and power stacker where there are lots of conducting wire connecting the control devices because the conducting wire going through the cavities of the handle and the main steering column with both ends fixed can't be twisted, stretched or squeezed.

Chinese patent NO. 200410061213.1 discloses a handle of extension instrument, where the extension of the instrument is realized by the cooperation of sleeve connected hole and screw bolt on the inner and outer handle pipe. Chinese patent NO. 200520014874.9 discloses a handle of extension instrument, the structure of which is similar as the above mentioned one, except that the outer pipe does not necessarily have a hole and the locking instrument is different. Chinese patent NO. 03136328.8 discloses an instrument or similar rod whose length is adjustable. The length adjusting structure is quite different from the above mentioned two handles of extension instruments, but the principle of extension is alike, which is by changing the relative position of the sleeve connected inner and outer pipe. All of the abovementioned structures, if used in adjusting the position of mechanical operation handle, could avoid relatively rotation of the inner and outer pipe during the course of extension. But when used in power pallet truck or power stacker, the problem of stretching or squeezing of the conducting wire going through the pipe still exists.

### Contents of the invention

The present invention aims at resolving the technical problem of the mechanical operation handle which is either un-adjustable or the conducting wire going through the pipe being stretched or squeezed when adjusted. To provide an adjustable tiller structure for an industrial vehicle that is not only able to adjust the position of the tiller rod, but also the conducting wire or the like won't be twisted, stretched or squeezed when the position is adjusted. When used in power pallet truck or power stacker, the working strength of operator can be reduced, and the accuracy of operation can be enhanced, meanwhile the technical problem caused by the twisting, stretching, or squeezing of conducting wire or the like going through the handle can be resolved.

In order to achieve the above purposes, it is provided according to the invention an adjustable tiller structure for an industrial vehicle according to claim 1

Considering that when only the position of hollow adapter element and main steering column is adjusted, the direction and position of the tiller rod and steering handle to which the operator is facing is symmetrically changed relatively to the vertical axis of the main steering column. The change disables the operation or make it inconvenient, so hollow adapter element and tiller articulation section can be fixed in two different positions successively, in both of which the position of hollow adapter element is symmetrical to the vertical axis of the opening of the cavity of tiller articulation section.

To realize the transfer between the fixing position of hollow adapter element and main steering column and the fixing position of hollow adapter element and tiller articulation section, a hollow adapter element with proper structure is necessary, whose overall shape is like a horizontal "7" or horizontal "C" and the inner cavity of which is like a horizontal "Z" or horizontal "S". The vertical cavity of hollow adapter element is sleeve connected with the cavities of main steering column and tiller articulation section, and fixed at the sleeve connecting part. The vertical cavity is connected through the horizontal or gradient cavity of the hollow adapter element, which is basically in the shape of horizontal "Z" or horizontal "S".

To realize the transfer of the fixing position of hollow adapter element and main steering column, the adjustable tiller structure is as defined in claim 4.

Similarly, to realize the transfer of the fixing position of the hollow adapter element and tiller articulation section, the structure of the sleeve connecting part of the inner cavity of the tiller articulation section and the vertical cavity of the hollow adapter element is designed as a clearance fit consisting a round axle hole and a round hollow shaft, the contact surface of the sleeve connecting part is smooth, the round axle hole and round hollow shaft can rotate relatively without radial play.

To make the hollow adapter element and main steering column firmly fixed, pinholes can be formed on the hollow adapter element or the main steering column , and accordingly locking pins can be formed on the main steering column or hollow adapter element, the pinholes and the locking pins cooperate to fix the hollow adapter element and the main steering column.

Similarly, to make the hollow adapter element and tiller articulation section firmly fixed, pinholes can be formed on the hollow adapter element or the tiller articulation section , and accordingly locking pins can be formed on the tiller articulation section or hollow adapter element, the pinholes and the locking pins cooperate to fix the hollow adapter element and the tiller articulation section.

The locking pin has to be disengaged from at least one pin hole to adjust the position of the hollow adapter element and main steering column, then has to be plugged in a pair of pin and pinhole to re-fix the two. Considering that the position of the steering handle may need to be adjusted frequently, the locking pin should be easy to be plugged in or pulled out. An easy but effective way is to provide auto reposition locking pins on the upper portion of the main steering column or on the lower portion of the hollow adapter element. According to two embodiments of the invention, the auto reposition locking pin can be in several different forms with the same technical essential which is a flexible locking pin mounted on the main steering column or on the hollow adapter element, and not need to be removed.

Similarly the locking pin has to be disengaged from at least one pin hole to adjust the position of the hollow adapter element and tiller articulation section, then has to be plugged in a pair of pin and pinhole to re-fix the two. Considering that the position of the steering handle may need to be adjusted frequently, the locking pin should be easy to be plugged in or pulled out. An easy but effective way is to provide auto reposition locking pins on the lower portion of the tiller articulation section or on the upper portion of the hollow adapter element. According to two embodiments of the invention, the auto reposition locking pin can be in several different forms with the same technical essential which is a flexible locking pin mounted on the tiller articulation section or on the hollow adapter element, and not need to be removed.

Considering that if the rotating angle of the hollow adapter element around the vertical axis of the cavity of main steering column is not limited when the position is being adjusted, the conducting wire or the like going through the cavities of the hollow adapter element and the main steering column may be over twisted, it's necessary to mount a rotating angle restrictive device. The rotating angle restrictive device could limit the position of the hollow adapter element relative to the vertical axis of cavity of main steering column in a range of 180° when operator adjust the relative position of the hollow adapter element and main steering column. The rotating angle restrictive device could be realized by the cooperation of a bulge formed on the hollow adapter element and a semicircle slot formed accordingly on the main steering column, or else a bulge formed on the main steering column and a semicircle slot formed accordingly on the hollow adapter element.

Similarly considering that if the rotating angle of the hollow adapter element around the vertical axis of the cavity of tiller articulation section is not limited, the conducting wire or the like going through the cavities of the hollow adapter element and tiller articulation section may be over twisted, so it's necessary to mount a rotating angle restrictive device. The rotating angle restrictive device could be realized by the cooperation of a bulge formed on the hollow adapter element and a semicircle slot formed accordingly on the tiller articulation section, or else a bulge formed on the tiller articulation section and a semicircle slot formed accordingly on the hollow adapter element.

Considering the requirement of processing and use, the downward surface of the hollow adapter element is formed at least partly open, except for the sleeve connecting part connecting with the main steering column, while for the seek of the strength and good-looking the other surfaces are made close, except for the sleeve connecting part connecting with the tiller articulation section.

The invention will be described in detail with reference to the figures.

### Description of figures

Figure 1 shows the three-dimensional cross-sectional schematic view of the invention;
Figure 2 shows the front plan schematic view of the position of the adjustable tiller structure according to figure 1;
Figure 3 shows the front plan schematic view of the position of the adjustable tiller structure after the position being adjusted according to figure 2;
Figure 4 shows the front plan schematic view of a hollow adapter element;
Figure 5 shows the bottom plan schematic view of the hollow adapter element shown in figure 4;
Figure 6 shows the top plan schematic view of the hollow adapter element shown in figure 4;
Figure 7 shows the three-dimension cross-sectional schematic view of the hollow adapter element shown in figure 4;
Figure 8 shows the front plan schematic view of another hollow adapter element;
Figure 9 shows the bottom plan schematic view of the hollow adapter element shown in figure 8;
Figure 10 shows the top plan schematic view of the hollow adapter element shown in figure 8;
Figure 11 shows the cross-sectional structural schematic view of the auto reposition locking pin; and
Figure 12 shows the three-dimensional breakdown schematic view of another embodiment of the invention.

The parts listed in the figures are as follows: 11- tiller rod, 12 - tiller shaft, 13 - steering handle, 21- tiller articulation section , 22 - hole for axle; 31- hollow adapter element, 41 - main steering column, 50 - hole for locking pin, 51 - locking pin, 501 - hole for horizontal locking pin, 510 - horizontal locking pin, 5101 - spring for horizontal locking pin, 5102 - button slot, 5103 - button, 5104 - screw, 511 - shaft, 512 - elastic pin, 513 - handgrip, 514 - spring, 515 - hollow nut, 60 - semicircle restriction slot, 61 - restriction bulge, 62 - restriction screw, 63 - restriction slot, 64 - screw for restriction bolt.

### Mode for carrying out the invention

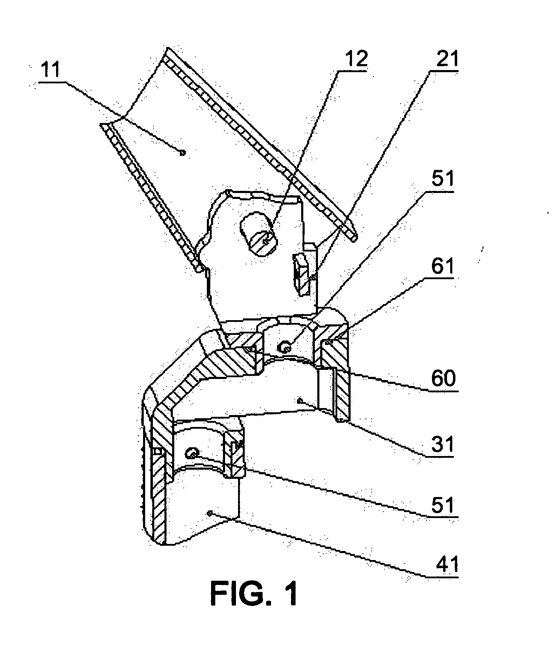

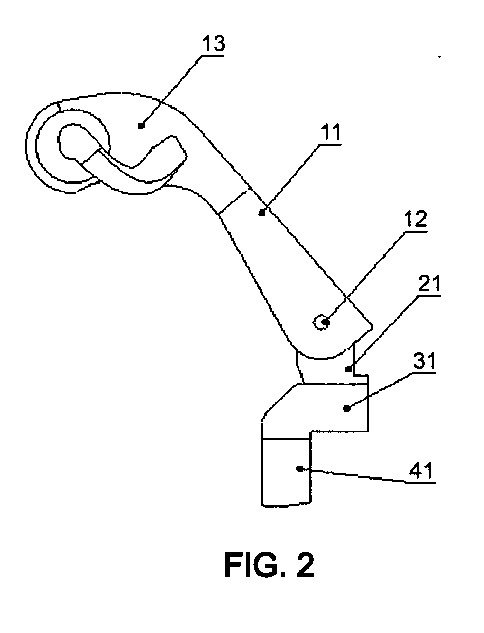

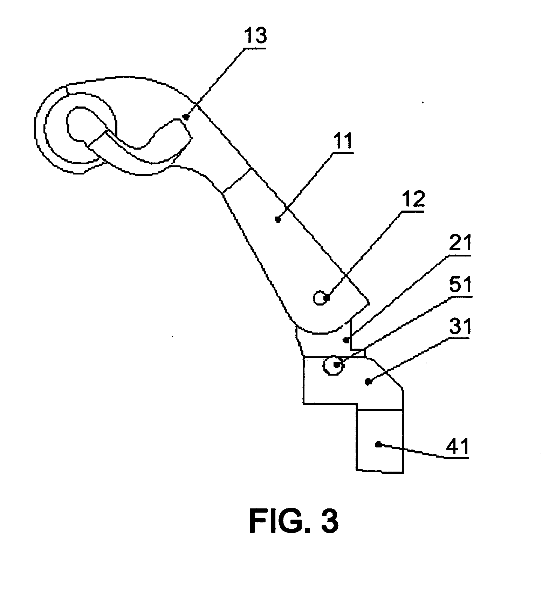

As shown in figure 1, an adjustable tiller structure for an industrial vehicle suitable to be used in industrial equipment including power pallet truck and power stacker, consists of tiller rod 11, tiller articulation section 21, hollow adapter element 31 and main steering column 41, etc., in which one end of the tiller rod 11 is connected with tiller articulation section 21 through tiller shaft 12 and form a rotary connection. As shown in figure2 and figure 3, the other end of the tiller rod 11 is connected with the steering handle 13 which is held by the operator, and the steering handle 13 can swing around the tiller shaft 12. The tiller articulation section 21 is indirectly connected with the main steering column 41 through the hollow adapter element 31, that is, the hollow adapter element 31 is directly fixed to tiller articulation 21 on the upper portion, while directly fixed to the main steering column 41 on the lower portion. Tiller articulation section 21, hollow adapter element 31 and main steering column 41 can rotate horizontally round the vertical axis of the cavity of main steering column 41 in the same direction and with same angle. The main steering column 41 is connected with the steering device of the machine thereof, thus the machine can be steered accordingly when an operator swings the steering handle 13. The cavities of tiller rod 11, tiller articulation section 21, hollow adapter element 31 and main steering column 41 are communicated with conducting wires or the like going through which are usually fixed to the buttons on the steering handle 13 on the upper portion and fixed to the control unit of the machine thereof on the lower portion. In general, the conducting wire or the like can't be twisted, stretched or squeezed. Because the layout of conducting wire or the like is already known in the field, so it is not described in detail in the figures, then the figures can show clearly the mechanical structure of the invention. As can be seen clearly in figure 1, the cavity of tiller articulation section 21 in the form of hollow shaft is sleeve connected with the upper portion of the vertical cavity of the hollow adapter element 31 in the axle hole with suitable diameter, the contact surface of tiller articulation section 21 and hollow adapter element 31 is smooth and they form a clearance fit, if not fixed by locking pin 51, the tiller articulation section 21 and hollow adapter element 31 can rotate relatively without radial play.

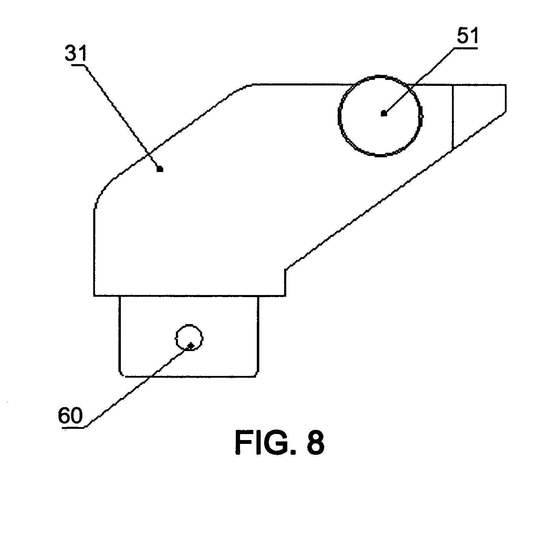

The conducting wires or the like go through the cavity of tiller articulation section 21. The cavity of hollow adapter element 31 is sleeve connected with the cavity of main steering column 41 in the same way with conducting wires or the like going through. Obviously, in the invention, the openings of the inner cavities of the tiller articulation section 21 and the main steering column 41 are positioned so as to be shifted in an horizontal direction, in other words, they are not superposed and are communicated with each other through a horizontal cavity provided by hollow adapter element 31, that means that the vertical axis of the openings of the inner cavities of the tiller articulation section 21 and the main steering column 41 are spaced. The hollow adapter element 31 with the shape of horizontal "7" or horizontal "C" could also provides a gradient cavity to communicate the openings of the inner cavities of the tiller articulation section 21 and the main steering column 41, and the angle between the gradient cavity and the cavity of the tiller articulation section 21 or the cavity of the main steering column 41 are all blunt angles. As shown in figure 8, the hollow adapter element 31 which provides a gradient cavity to communicate the opening of the inner cavities of the tiller articulation section 21 and the main steering column 41 can also be in a more compact form. Whatever the shape is, the vertical cavity and the horizontal or gradient cavity of the hollow adapter element 31 formulate a cavity in the shape of a horizontal "Z" or horizontal "S" with conducting wire or the like going through. As shown in figure 1, a locking pin 51 mounted on the hollow adapter element 31 fixes the tiller articulation section 21 and the hollow adapter element 31 both in horizontal and vertical direction, meanwhile a locking pin 51 mounted on the main steering column 41 fixes the main steering column 41 and the hollow adapter element 31 both in horizontal and vertical direction. Under this fixing position, the cavity of tiller articulation section 21 lies to the right of the cavity of main steering column 41, that is the front side of the machine to which the adjustable tiller structure for an industrial vehicle of the invention belongs. Thus, the operator standing on pedal left to the cavity of main steering column 41 won't feel that the steering handle 13 is too long or the steering handle 13 is too close to the body. Then, when the operator has to fold up the pedal and walk behind the machine to which the adjustable tiller structure for an industrial vehicle of the invention belongs to operate the hollow adapter element 31, he can pull out the locking pin 51, and rotate the hollow adapter element 31 around the vertical axis of main steering column 41 to 180°, then plug in the locking pin 51 again to re-fix the hollow adapter element 31 with the main steering column 41. Meanwhile rotate the hollow adapter element 31 around the vertical axis of cavity of tiller articulation section 21 to 180° and re-fix it. Then as shown in figure 2 and 3, the positions of the hollow adapter element 31 under its two different fixing states are not only symmetrical to the vertical axles of the main steering column 31 but also symmetrical to the vertical axis of the opening of the inner cavity of the tiller articulation section 21.

As to the operator, although the distance between the machine and himself becomes longer when the pedal is folded up and the operator walks to operate because of the thickness of the pedal and distance he intends to keep to avoid collision, the operator still feel comfortable when holding and swinging the steering handle 13, and won't feel it too far away because the fixing positions of the hollow adapter element 31 with both the main steering column 41 and the tiller articulation section 21 are changed and result in that the positions of steering handle 13, tiller rod 11 and tiller articulation section 21 have already been adjusted to the left of the cavity of the main steering column 41, that is the back side of the machine as shown in figure 3. Similarly, if the operator needs to go back to the pedal to operate, the adjustable tiller structure for an industrial vehicle under the fixing condition shown in figure 3 can be adjusted back to the fixing condition shown in figure 1 and 2.

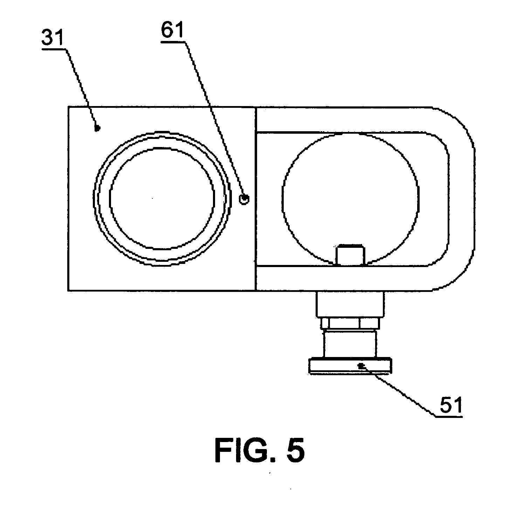

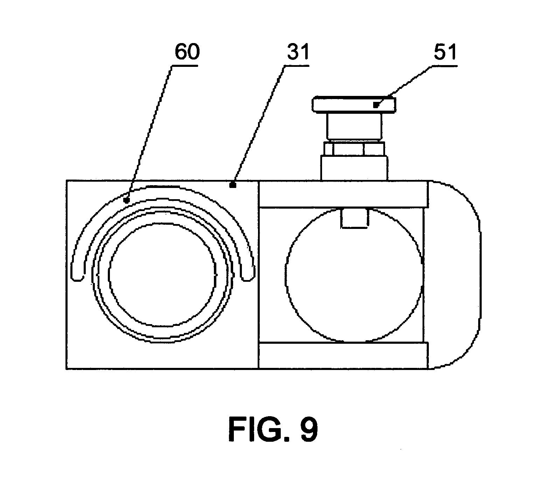

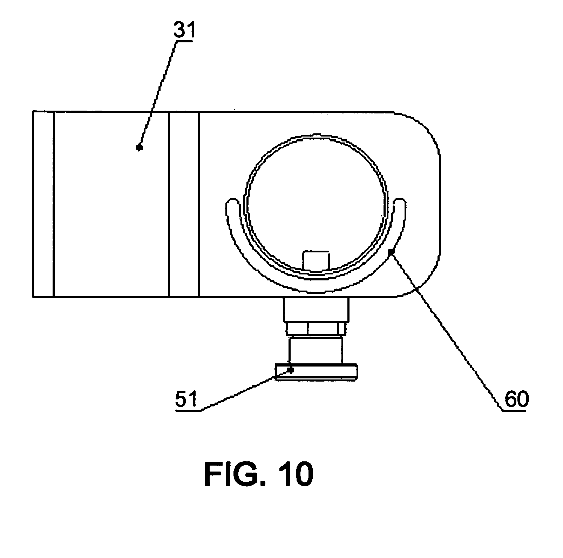

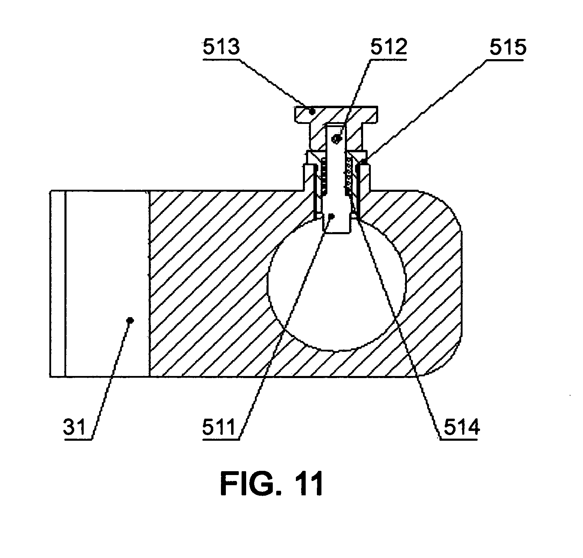

Besides the reason mentioned above, there are some other reasons why the position of the steering handle 13 needs to be adjusted, such as the height of the operator, different working conditions of the machine and different circumstance etc. Whatever the reason to adjust the position of steering handle 13 is, it needs to be fulfilled accurately and quickly. To achieve this goal, the overall structure and the partial structure of the invention shown in figure 1 to figure 10 all include a auto reposition locking pin 51 as shown in figure 11. The locking pin can be mounted on the tiller articulation section 21, or on the hollow adapter element 31 or the main steering column 41. Whichever elements it is mounted, the locking pin 51 engages in a pair of pinholes 50 to fix the tiller articulation section 21 with the hollow adapter element 31, or to fix the hollow adapter element 31 with the main steering column 41. As shown in figure 11, the auto reposition locking pin 51 is mounted on the upper portion of the hollow adapter element 31 to fix the hollow adapter element 31 with tiller articulation section 21. This locking pin 51 consists of pin shaft 511, elastic pin 512, handgrip 513, spring 514 and hollow nut 515. When the position of steering handle 13 needs to be adjusted and the position between hollow adapter element 31 and tiller articulation section 21 needs to be re-fixed, the operator only needs to pull up the handgrip 513, disengage the pin shaft 511 from the locking pinhole 50 through the connection of elastic pin 512, then the tiller articulation section 21 and the hollow adapter element 31 can be rotated up to 180°horizontally. Then the operator just releases the handgrip 513, the spring mounted between the hollow nut 515 and the pin shaft 511 will push the pin shaft 511 into another locking pinhole 50 on the tiller articulation section 21 to re-fix the tiller articulation section 21 with the hollow adapter element 31. The characteristic of auto reposition locking pin 51 is that it's elastic and do not need to be demounted. Mounting it on tiller articulation section 21 or hollow adapter element 31 or main steering column 41 can achieve the transfer of the fixing position of tiller articulation section 21 with hollow adapter element 31 and the transfer of the fixing position of hollow adapter element 31 with main steering column 41 accurately and quickly, thus realize the adjustment of the steering handle 13 position.

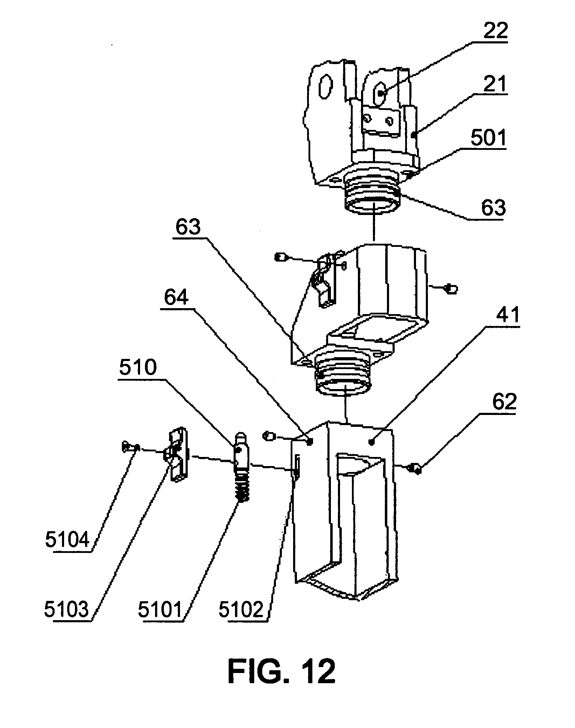

As shown in figure 12 is another embodiment of the auto reposition structure used between tiller articulation 21, hollow adapter element 31 and main steering column 41. Taking the horizontal locking pin 510 mounted on the upper portion of the main steering column 41 for example, as shown in figure 12, part of the horizontal locking pin 510 is inside the vertical hole opening upward on the upper portion of the main steering column 41, and the diameters of the two are fitting-good and the contact surface is smooth. While lower element of the horizontal locking pin 510 is sleeve connected with the spring 5101, and there is a screw hole formed on the side of the horizontal locking pin 510 with a bolt 5104 engaged into through a button 5103. The button 5103 is fixed to the horizontal locking pin 510, and the range of up-down movement of the button is limited by button slot 5102. When the button 5103 is not pressed, the spring 5101 raises the upper element of the horizontal locking pin 510 out of the upper surface of the main steering column 41 to plug it right into the horizontal locking pinhole 501 on the lower portion of the hollow adapter element 31, which is suitable in diameter, then the relative position of the main steering column 41 and the hollow adapter element 31 is fixed horizontally. Meanwhile, to avoid the change of the relative position of the main steering column 41 and the hollow adapter element 31 vertically, there are two locking screw holes 64 formed on the two sides of the main steering column 41 with different height, while there are two restriction slots 63 formed on the outer surface of the hollow shaft of the hollow adapter element 31 with different height, then the main steering column 41 and the hollow adapter element 31 can be fixed vertically. By using the above mentioned structure, tiller articulation section 21 and the hollow adapter element 31 can be fixed completely both horizontally and vertically. The fixing position of the main steering column 41 with the hollow adapter element 31 or the fixing position of tiller articulation section 21 with the hollow adapter element 31 can be easily changed by pressing or releasing the button accordingly, thus realizing the adjustment of the steering handle 13 position in whole accurately and quickly.

In the embodiment shown in figure 12, the reason why there are two restriction slots 63 formed on the outer surface of the round hollow shaft of the tiller articulation section 21 in lower portion and the outer surface of the hollow shaft of the hollow adapter element 31 in lower portion respectively with different height, and the adjacent restriction slots 63 are 180°spaced apart around the circle, is to avoid the conducting wire going through the cavities being twisted or over twisted during the course of adjusting the handle position repeatedly, such as adjusting the relative position of tiller articulation section 21 with hollow adapter element 31 or the relative position of hollow adapter element 31 with main steering column 41 in the same direction repeatedly. As can be seen in figure 12, each of the restriction slots 63 has a restrictive structure which locates at the end of the restriction slot 63 and can restrict the move of the restriction screw 62 along the restriction slot 63. In fact when the tiller articulation section 21 is fixed with the hollow adapter element 31 and hollow adapter element 31 is fixed with the main steering column 41, each of the restriction screw 62 is right in touch with the above mentioned restriction structure in the restriction slot 63. So if the position of the steering handle 13 needs to be adjusted again, the adjacent parts have to rotate in a reverse direction to re-fix. Thus the conducting wire going through the cavities of tiller articulation section 21, hollow adapter element 31, main steering column 41 being twisted or even over twisted can be avoided.

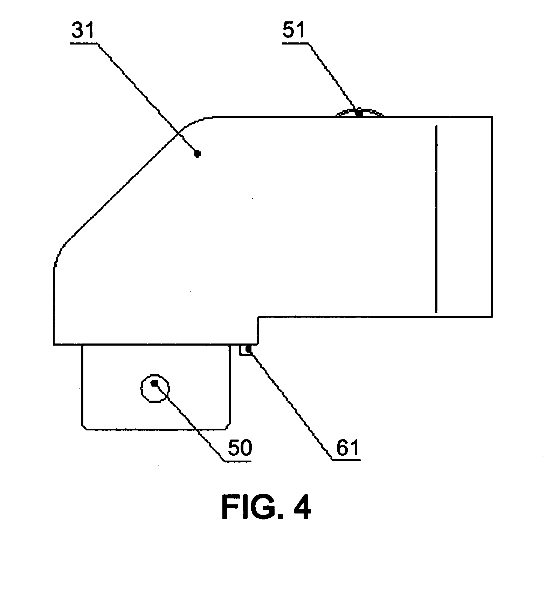

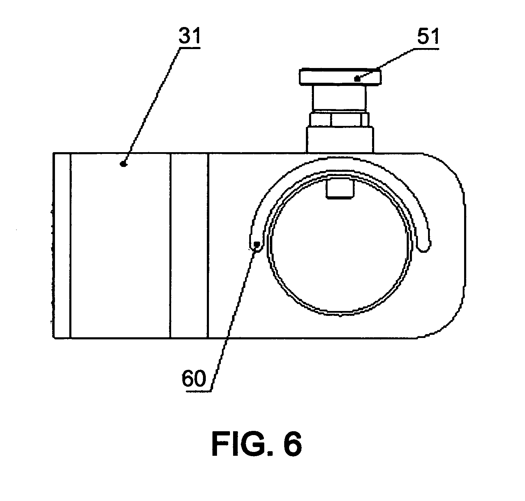

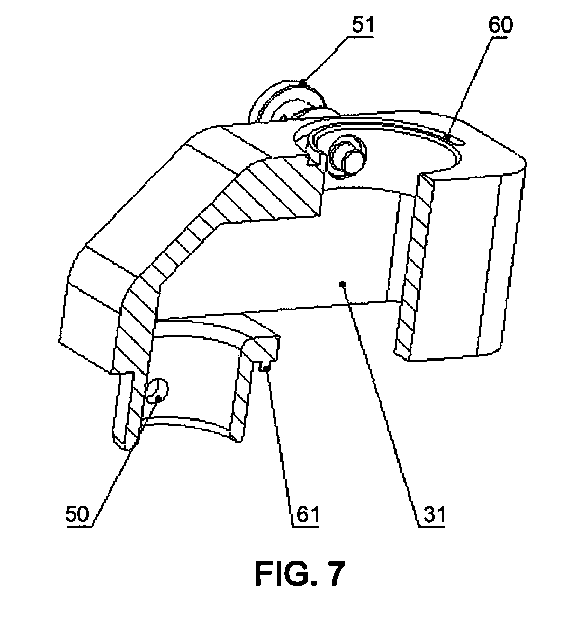

By observing figure 1, 4, 5, 6, 7, 9 and 10, we can see that to avoid rotating in the same direction more than two times when adjusting the position of steering handle 13 using the auto reposition locking device shown in figure 11,which is capable of fixing the main steering column 41 with the hollow adapter element 31 or fixing the tiller articulation section 21 with the hollow adapter element 31 both vertically and horizontally, a semicircle restriction slot 60 and a restriction bulge 61 are needed to be formed on the contact surface of the adjacent parts. As can be seen in figure 1, there is a columnar restriction bulge 61 formed on the tiller articulation section 21, and accordingly there is a semicircle restriction slot 60 formed on the hollow adapter element 31 with same width as shown in figure 6 and figure 7. Similarly there is a semicircle restriction slot 60 formed on the main steering column 41, meanwhile there is a columnar restriction bulge 61 formed on the hollow adapter element 31 with same width, as shown in figure 4, 5 and figure 7. Obviously the semicircle restriction slot 60 and restriction bulge 61 can be used cooperatively in any adjacent parts.

Besides as can be seen in figure 7, the characteristics of a hollow adapter element 31 which is easy to be processed and used are: the downward surface of the hollow adapter element 31 is formed at least partly open, except for the sleeve connecting part connecting with the main steering column 41, while the other surfaces are made close, for the sake of strength and good-looking except for the sleeve connecting part connecting with the tiller articulation section 21.

## Claims

1. An adjustable tiller structure for an industrial vehicle, which comprises:
- a tiller rod (11) having an upper end fixed to a steering handle (13),
- an articulation section that defines a tiller rod support (21), the tiller rod (11) comprising a lower end connected to the tiller rod support (21), so that the tiller rod (11) is capable of being rotated relative to said tiller rod support (21) around an horizontal axis,
- a main steering column (41) to which the tiller rod support (21) is fixed and connected with mechanical steering structure, the tiller rod support (21) and the tiller rod (11) being able to rotate horizontally around a vertical axe defined by an upper part of the main steering column (41) in the same direction and with same angle, whereby said upper end of the tiller rod (11) can swing around the main steering column (41),
- a communicated cavity consisting of the inner cavities of the tiller rod (11), the tiller rod support (21) and the steering column (41), and which provides a passage for conducting wires and other parts to go through, wherein the inner cavities of the tiller rod support (21) and the main steering column (41) are positioned so as to be shifted in an horizontal direction, the tiller rod support (21) and the main steering column (41) being fixed with each other indirectly via a hollow adapter element (31), the adapter element (31) comprising a cavity provided with a lower opening and an upper opening defining two vertical axes that are shifted in an horizontal direction, said upper opening communicating with the inner cavity of the tiller rod support (21) and said lower opening communicating with the inner cavity of the main steering column (41), **characterized in that** the adapter element (31) can rotate horizontally of 180° around the main steering column, thus allowing two positions in the longitudinal direction for the tiller rod support (21) fore and aft of the axis of the main steering column (41) which are symmetrical to the vertical axis of the main steering column (41).

2. An adjustable tiller structure according to claim 1, **characterized in that**: the positions of the adapter element (31) before and after pivoting horizontally of 180° are symmetrical to the vertical axis of the opening of the inner cavity of the tiller rod support (21).

3. An adjustable tiller structure according to claim 2, **characterized in that**: the overall shape of the adapter element (31) is like a horizontal "7" or horizontal "C", the inner cavity of the adapter element (31) is like a horizontal "Z" or horizontal "S", said inner cavity including two shifted vertical cavities so as to be sleeve connected with the inner cavities of the main steering column (41) and the tiller rod support (21) respectively, and fixed at the sleeve connecting parts, an horizontal or gradient cavity of the adapter element (31) connecting the two vertical cavities.

4. An adjustable tiller structure according to claim 3, **characterized in that**: the structure of the sleeve connecting part of the inner cavity of the main steering column (41) and the adjacent vertical cavity of the adapter element (31) is designed as a clearance fit consisting of a round axle hole and a round hollow shaft, the contact surface of the sleeve connecting part is smooth, the round axle hole and round hollow shaft can rotate relatively without radial play.

## Patentansprüche

1. Eine einstellbare Pinnenstruktur für ein industrielles Fahrzeug, die umfasst:
- eine Pinnenstange (11) mit einem oberen Ende, das zu einem Lenkungshandgriff befestigt ist,
- einen einen Pinnenstangenträger (21) definierten Artikulationsabschnitt , die Pinnenstange (11) weist ein unteres Ende auf, das mit dem Pinnenstangenträger (21) verbunden ist, so dass die Pinnenstange (11) um eine horizontale Achse relativ zu der Pinnenstangenträger (21) drehbar ist,
- eine Hauptlenksäule (41), zu der der Pinnenstangenträger (21) befestigt ist und die mit einer mechanischen Lenkungsstruktur verbunden ist, der Pinnenstangenträger (21) und die Pinnenstange (11) sind horizontal um eine von einem oberen Teil der Hauptlenksäule (41) definierte vertikale Achse in der gleichen Richtung mit dem gleichen Winkel drehbar, wodurch das obere Ende der Pinnenstange (11) um die Hauptlenksäule (41) schwenken kann,
- einen zusammenhängenden Hohlraum, bestehend aus den inneren Hohlräumen der Pinnenstange (11), des Pinnenstangenträgers (21) und der Lenksäule (41), der Hohlraum stellt eine Passage bereit, durch die Leitungsdrähte und andere Teile durchlaufen, wobei die inneren Hohlräume des Pinnenstangenträgers (21) und der Hauptlenksäule (41) so positioniert sind, dass sie in der horizontalen Richtung verschoben werden, der Pinnenstangenträger (21) und die Hauptlenksäule (41) sind indirekt über ein hohles Adapterelement (31) zueinander befestigt, das Adapterelement (31) weist einen Hohlraum auf, der mit einer unteren Öffnung und einer oberen Öffnung versehen ist, die zwei vertikale Achsen definieren, die in einer horizontalen Richtung verschoben werden, die obere Öffnung ist mit dem inneren Hohlraum des Pinnenstangenträgers (21) verbunden und die untere Öffnung ist mit dem inneren Hohlraum der Hauptlenksäule (41) verbunden, **gekennzeichnet durch** zwei zu der vertikalen Achse der Hauptlenksäule (41) symetrische Stellungen in der Längsrichtung für den Pinnenstangenträger (21) vorn und hinter von der Achse der Hauptlenksäule (41), das Adapterelement (31) kann horizontal von 180° um die Hauptlenksäule (41) drehen.

2. Eine einstellbare Pinnenstruktur nach Ansrpuch 1, **dadurch gekennzeichnet, dass** die Stellungen des Adapterelements (31) vor und nach dem horizontalen von 180° Schwenken symetrisch zu der vertikalen Achse der Öffnung des inneren Hohlraums des Pinnenstangenträgers (21) sind.

3. Eine einstellbare Pinnenstruktur nach Ansrpuch 2, **dadurch gekennzeichnet, dass** die allgemeine Form des Adapterelements (31) wie eine horizontale "7" oder eine horizontale "C" ist, der innere Hohlraum des Adapterelements (31) wie eine horizontale "Z" oder eine horizontale "S" ist, der innere Hohlraum umfasst zwei verschobene vertikale Hohlräume, so dass der innere Hohlraum jeweils mit einer Hülse mit den inneren Hohlräumen der Hauptlenksäule (41) und des Pinnenstangenträgers (21) verbunden und an Verbindungshülsenteilen befestigt ist, ein horizontaler oder schräger Hohlraum des Adapterelements (31) verbindet die zwei vertikalen Hohlräume.

4. Eine einstellbare Pinnenstruktur nach Ansrpuch 3, **dadurch gekennzeichnet, dass** die Struktur des Verbindungshülsenteils des inneren Hohlraums der Hauptlenksäule (41) und des angrenzenden vertikalen Hohlraums des Adapterelements (31) als Spielpassung ausgestaltet ist, die aus einem runden Achsloch und einer runden Hohlwelle besteht, die Kontaktfläche des Verbindungshülsenteils ist glatt, die runde Achsloch und runde Hohlwelle können relative ohne radiales Spiel drehen.

## Revendications

1. Structure de timon ajustable pour un véhicule industriel, comprenant:
- une barre de timon (11) ayant une extrémité supérieure fixée à un manche de pilotage (13),
- une section d'articulation qui définit un support (21) de la barre de timon, la barre de timon (11) comprenant une extrémité inférieure reliée au support (21) de la barre de timon, de sorte que la barre de timon (11) peut être mise en rotation par rapport au support (21) de la barre de timon autour d'un axe horizontal,
- une colonne de direction principale (41) à laquelle le support (21) de la barre de timon est fixé et connecté avec structure de direction mécanique, le support (21) de la barre de timon et la barre de timon (11) étant capable de tourner horizontalement autour d'un axe vertical défini par une partie supérieure de la colonne de direction principale (41) dans la même direction et avec le même angle, l'extrémité supérieure de la barre de timon (11) pouvant pivoter autour de la direction principale de colonne (41),
- une cavité de communication composée de cavités intérieures de la barre de timon (11), du support (21) de la barre de timon et de la colonne de direction (41), et qui fournit un passage pour fils conducteurs et d'autres parties traversantes, les cavités intérieures du support (21) de la barre de timon et de la colonne de direction principale (41) étant positionnés de façon décalée selon une direction horizontale, le support (21) de la barre de timon et la colonne de direction principale (41) étant fixés l'un à l'autre indirectement par l'intermédiaire d'un élément adaptateur (31) creux, l'élément adaptateur (31) comprenant une cavité avec une ouverture inférieure et une ouverture supérieure définissant deux axes verticaux qui sont décalés selon une direction horizontale, l'ouverture supérieure communiquant avec la cavité interne du support (21) de la barre de timon et l'ouverture inférieure communiquant avec la cavité interne de la colonne de direction principale (41), **caractérisée en ce que** l'élément adaptateur peut tourner horizontalement de 180° autour de la colonne de direction principale, permettant ainsi l'obtention de deux positions dans le sens longitudinal du support (21) de la barre de timon devant et derrière l'axe de la colonne de direction principale (41) qui sont symétriques par rapport à l'axe vertical de la colonne de direction principale.

2. Structure de timon ajustable selon la revendication 1, **caractérisée en ce que**:
les positions de l'élément adaptateur (31) avant et après pivotement horizontal de 180 sont symétriques relativement à l'axe vertical de l'ouverture de la cavité interne du support (21) de la barre de timon.

3. Structure de timon ajustable selon la revendication 2, **caractérisée en ce que**:
la forme globale de l'élément adaptateur (31) est en forme de "7" horizontal ou de "C" horizontal, la cavité interne de l'élément adaptateur (31) étant en forme de "S" horizontal ou "Z" horizontal, ladite cavité interne incluant deux cavités verticales décalées de manière à être emmanchées avec les cavités intérieures du manchon de la colonne de direction principale (41) et du support (21) de la barre de timon respectivement, et fixées au niveau des parties emmanchées, une cavité horizontale ou gradient de l'élément adaptateur (31) reliant les deux cavités verticales.

4. Structure de timon ajustable selon la revendication 3, **caractérisée en ce que**:
la structure de la partie emmanchée de la cavité interne de la colonne de direction principale (41) et de la cavité verticale adjacente de l'élément adaptateur (31) est conçue comme un ajustement avec jeu, qui consiste en un trou rond et un arbre creux rond, la surface de contact de la partie emmanchée étant lisse, le trou rond et l'arbre creux rond pouvant tourner relativement sans jeu radial.
